# EUROPEAN PATENT SPECIFICATION

(11) **EP 1 309 148 B1**
(45) Date of publication and mention of the grant of the patent: **29.06.2005**
(21) Application number: 02007209.6
(22) Date of filing: 27.03.2002
(51) Int. Cl.: H04L 29/06, H04L 12/56

(54) **Data transfer apparatus for load sharing**
Datenübertragungsvorrichtung zur Lastverteilung
Dispositif de partage de charge et de transfert de données

(30) Priority: 30.10.2001 JP 2001332965
(43) Date of publication of application: 07.05.2003
(73) Proprietor: FUJITSU LIMITED, Kawasaki-shi, Kanagawa 211-8588 (JP)
(72) Inventor: Kurose, Yoshitoshi, Fujitsu Limited, Kawasaki-shi, Kanagawa 211-8588 (JP); Nomura, Yuji, Fujitsu Limited, Kawasaki-shi, Kanagawa 211-8588 (JP)
(74) Representative: HOFFMANN - EITLE

(56) References cited:
- EP-A- 1 130 849
- WO-A-98/57275
- SEGURA E W ET AL: "APPLICATION-LAYER ANYCASTING: A SERVER SELECTION ARCHITECTURE AND USE IN A REPLICATED WEB SERVICE" IEEE / ACM TRANSACTIONS ON NETWORKING, IEEE INC. NEW YORK, US, vol. 8, no. 4, August 2000 (2000-08), pages 455-466, XP000959121 ISSN: 1063-6692

## Description

### Background of the Invention

### Field of the Invention

The present invention relates to a data transfer apparatus, and in particular to a data transfer apparatus having communication quality assurance capability.

A load balancer is used as an example of a data transfer apparatus for assuring a communication quality to a server. The load balancer transfers data from a user terminal by switching among a plurality of servers, thereby preventing deterioration of communication quality due to states of server such as a CPU load and a number of connections.

Also, in order to assure the communication quality on a communication path, a data transfer apparatus having a communication resource reservation capability is used. Such a data transfer apparatus reserves resources on the communication path required for data transmission/reception, thereby preventing deterioration of the communication quality due to states of the communication paths.

### Description of the Related Art

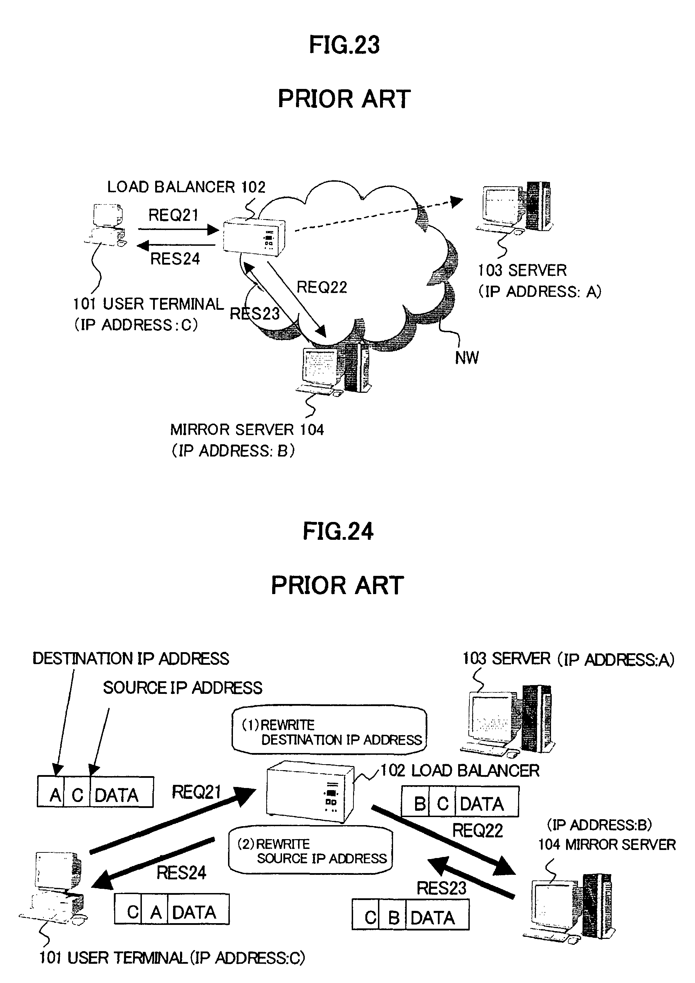

Fig.23 shows an example of such a data transfer apparatus in the shape of the load balancer. A network to which the load balancer is applied is composed of a user terminal 101, a load balancer 102, a server 103, and a mirror server 104.

In operation, the load balancer 102 having received a request REQ21 to the server 103 from the user terminal 101 transfers the request REQ21 as a request REQ22 to the mirror server 104 associated with the server 103 based on e.g. a predetermined switchover sequence, and transfers a response RES23 from the mirror server 104 as a response RES24 to the user terminal 101.

Thus, the load balancer 102 can make the request REQ21 from the user terminal 101 switched over from the server 103 to the mirror server 104.

Transfer techniques such as an IP address rewriting for data transmitted by the user terminal 101, a MAC address rewriting, and a label switching by an MPLS are known. Fig.24 shows an IP address rewriting technique when the load balancer of Fig.23 balances the load of the server 103.

The user terminal 101 transmits the request REQ21 to the server 103. The request REQ21 is provided with an IP address "A" of the server 103 as a destination IP address.

The load balancer 102 changes the destination IP address "A" of the server 103 within the request REQ21 to an IP address "B" of the mirror server 104 to be transferred to the server 104 as the request REQ22.

Resultantly, the mirror server 104 receives the request REQ22 from the user terminal 101, performs a predetermined data processing, and transmits the response RES23 to the user terminal 101.

The load balancer 102 rewrites the source IP address "B" included in the response RES23 into the IP address "A" of the server 103 to be transferred to the user terminal 101 as the response RES24. As a result, it seems to the user terminal 101 having received the response RES24 as if it is communicating with the server 103.

Thus, the load balancer 102 can conceal a physical or a logical location of the server 104, thereby enabling the user terminal 101 to communicate with the server 104 which can be regarded as a target server without requiring additional specific functions.

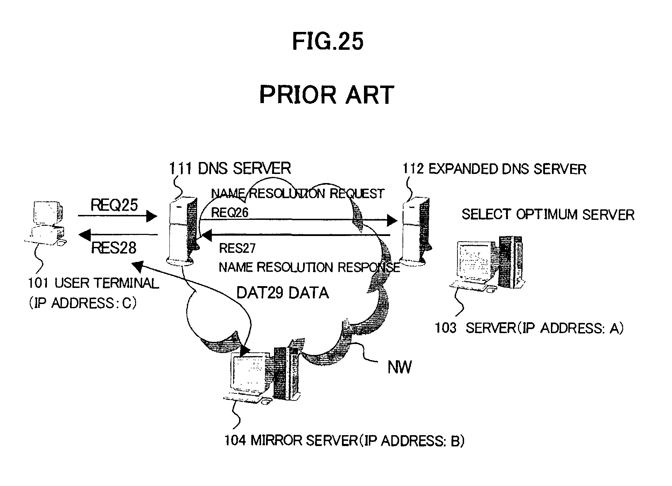

Fig.25 shows an example of another prior art load balancer. The network to which this load balancer is applied includes the user terminal 101, the server 103, and the mirror server 104 similar to Fig.23, as well as a DNS server 111 as the load balancer and an expanded DNS server 112.

The user terminal 101 transmits a name resolution request REQ25 (IP address request) of the server 103 to the DNS server 111 in order to communicate with the server 103.

The DNS server 111 transfers the name resolution request REQ25 received from the user terminal 101 as a name resolution request REQ26 to the expanded DNS server 112.

The expanded DNS server 112 receives the name resolution request REQ26, and determines to respond with the IP address "B" of the mirror server 104 instead of the IP address "A" of the mirror server 103, for example, in order to perform a load balancing.

It is hereby supposed that the expanded DNS server 112 in this example simply responds with the pre-registered IP address "B" of the mirror server 104 randomly.

Thereafter, the expanded DNS server 112 responds to the DNS server 111 with the IP address "B" of the mirror server 104 as a name resolution response RES27.

The DNS server 111 transfers the received name resolution response RES27 based on the IP address "B" thereof as a response RES28 with the IP address "B" to the user terminal 101.

The user terminal 101 transmits/receives data DAT29 to/from the mirror server 104 instead of the original server 103.

As described above, the user terminal 101 communicates with the mirror server 104 designated by the expanded DNS server 112, thereby reducing the load of the server 103.

Also, while the expanded DNS112 selects the mirror server 104 randomly in this example, a mirror server which is considered the nearest in terms of a distance from the IP address of the DNS server 111 may be selected depending on a selected algorithm, in which case it is made possible to prevent an increase of delay due to the distance between the user terminal 101 and the server 103.

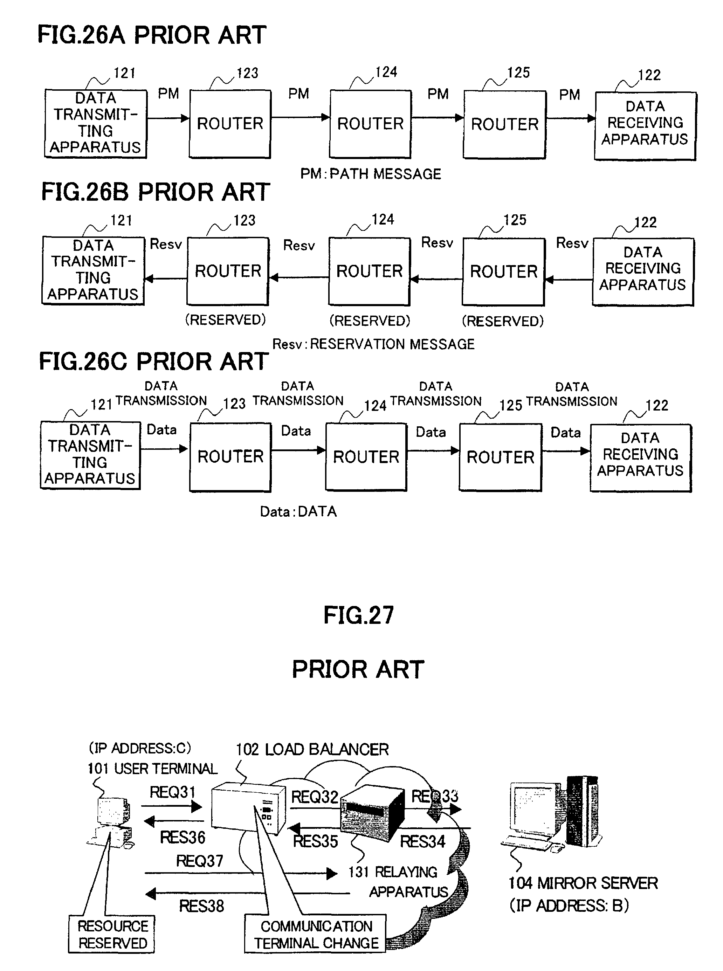

Figs.26A-26C show prior art data transfer apparatus having communication resource reservation capability.

Firstly, as shown in Fig.26A, a data transmitting apparatus 121 transmits a path destination message (hereinafter, referred to as path message) PM to a data receiving apparatus 122. Routers 123-125 located between the data transferring apparatus 121 and the data receiving apparatus 122 transfer the path message PM and store the information of the apparatuses having transferred the path message PM thereto.

Then, as shown in Fig.26B, the data receiving apparatus 122 having received the path message PM transmits a bandwidth reservation message (hereinafter, referred to as reservation message) RESV that is a message for requesting a bandwidth reservation to the data transferring apparatus 121. The routers 123-125 having received the bandwidth reservation message RESV reserve the bandwidth based on the respective reservation message RESV, and transfer the reservation message RESV to the next apparatus stored therein.

Thereafter, as shown in Fig.26C, the data transmitting apparatus 121 having received the reservation message RESV transmits data DATA to the data receiving apparatus 122 in order to start providing the communication service.

Thus, the data receiving apparatus 122 receives data from a bandwidth-reserved path, so that services with an assured communication quality can be offered. Also, the resource reservation on the communication path is made possible by a similar method utilizing a label distribution by a LDP (Label Distribution Protocol), and the like.

However, even if the mirror server 104 is designated by the load balancer 102, the DNS server 111, and the expanded DNS server 112 shown in Figs.23-25, the mirror server 104 is not selected after having reserved the communication resource, so that there is a problem that the communication quality between the user terminal 101 and the mirror server 104 is not assured.

Also, the data transfer apparatus shown in Figs.26A-26C does not have a capability of selecting one of a plurality of servers, but has only a capability to reserve a resource of a single server.

Therefore, in such a case that a resource is not reservable for a communication with a particular server but is reservable for a communication with another server, there is a problem that the communication is not made possible with the other server where the resource is reservable.

Hereinafter, an arrangement combining the above-mentioned two kinds of data transfer apparatuses, namely a load balancer and a data transfer apparatus having communication resource reservation capability, will be considered referring to Fig.27.

Firstly, the user terminal 101 transmits a communication start request REQ31 to the server 103 (not shown). The load balancer 102 transmits/receives a communication start request and a response thereof initiated by a request REQ32 and terminated by a response RES35, and transfers a response RES36 to the user terminal 101. The description heretofore is the determination of the server 104 by the load balancing capability, and is likewise applied to a case the DNS server or the like is utilized.

Thereafter, the user terminal 101 requests a communication resource reservation with a request REQ37 by the communication resource reservation capability. Assuming that a relaying apparatus 131 does not reserve the communication resource, the request REQ37 by the user terminal 101 is rejected by the relaying apparatus 131 on the path to the mirror server 104, so that a rejection response RES38 is returned. Therefore, the user terminal 101 can not undergo the communication quality assurance as a result.

Such a problem occurs due to the fact that the load balancing capability and the communication resource reservation capability are independent of each other.

Namely, the communication resource reservation can be made only after the selection of the server of the data-transmitted destination.

Nevertheless, even when the mirror server 104 is assumed to be communication-quality-assurable and the user terminal 101 tries to communicate therewith, there are cases where since the resource is not reserved for the selected mirror server 104, the quality can not be assured for the communication service with the mirror server 104. Particularly, when states of the network and the server dynamically changes, the communication quality assurance after the server selection becomes more difficult.
In WO 98/57275 there is disclosed an arrangement for load sharing in computer networks and more particularly an arrangement for distribution of traffic, for instance via Internet, from clients to service suppliers who provide services from many servers. Distribution is possible to one of a number of replicated servers (mirror servers). A suitable server is selected, for instance on the basis of available resources at the interface of the server, or less delay in the transmission. A number of replicated servers belong to an anycast-group and each anycast-group is connected to a domain name server which has the ability to select one of the replicated servers, to that a router can establish a connection between the selected server and the service-requesting client computer. Each replicated server can transmit a resource advertisement which contains information about available resources at the server in question, and about the link parameters of the server.

### Summary of the Invention

It is accordingly an object of the present invention to provide a data transfer apparatus mutually relating the load balancing capability and the communication resource reservation capability, thereby assuring communication quality.

In order to achieve the above mentioned object, a data transfer apparatus comprises: a transferring destination information reader for 7 reading information of a mirror server associated with a primary server based on a request for communication of a predetermined quality sent from a source terminal to the primary server; a resource reservation instructor for giving instructions for a communication resource reservation corresponding to the predetermined communication quality to the mirror server, and a destination changer for changing the primary server to the mirror server; characterized by a resource reserver for determining whether or not a communication resource of the mirror server has been reserved based on the instructions by the resource reservation instructor, and for responding a result of the determination thereof to the resource reservation instructor; and wherein the resource reservation instructor is adapted to instruct the destination changer to change the primary server to the mirror server which has reserved the communication resource when the resource reserver determines that the communication resource of the mirror server has been reserved.

Namely, in the present invention, a transferring destination information reader reads information of a mirror server associated with a primary server based on a request for communication of a predetermined quality sent from a source terminal to the primary server received, a resource reservation instructor gives instructions for a communication resource reservation corresponding to the predetermined communication quality to the mirror server, and a resource reserver determines whether or not a communication resource of the mirror server has been reserved based on the instructions by the resource reservation instructor, and responds with a result of the determination thereof to the resource reservation instructor.

Thereafter, the resource reservation instructor instructs the destination changer to change the primary server to the mirror server which has reserved the communication resource when the resource reserver determines that the communication resource of the mirror server has been reserved, and the destination changer changes from the primary server to the mirror server according to the instructions.
Therefore, upon communication with a predetermined quality, it is made possible to transmit data to a mirror server which has reserved a communication quality, so that e.g. the mirror server or the like can be selected depending on communication resource reservation states for access of a communication service of a predetermined quality provided by a specific server.

Thus, it is made possible to avoid such a situation that a communication service with a predetermined quality is not available after choosing a mirror server or the like, thereby enabling a communication quality assurance specifically in cases where states of the network and the server change dynamically. (claim 1)

Also, the transferring destination information reader may be provided with a transferring destination information holder for holding an address of the mirror server. (claim 2).

Also, the communication resource may comprise a communication bandwidth.
Thus, it is made possible to assure an access to a mirror server which has reserved the communication bandwidth, thereby avoiding a situation where the bandwidth can not be assured after selecting e.g. a mirror server or the like. (claim 3)

Also, the mirror server may include the primary server.
Thus, the mirror server including the primary server is determined, so that it is made possible to transmit the data to the destination address unchanged when only the primary server can reserve the communication resource. (claim 4)

Also, in presence of a plurality of transferring destination terminals, the resource reservation instructor may instruct the resource reserver to make a communication resource reservation to a single mirror server thereof, and may instruct the destination changer to change the primary server when the communication resource of the single mirror server has been reserved by the resource reserver, and otherwise may instruct the resource reserver to make a communication resource reservation to another single mirror server.

Namely, a communication resource reservability is determined according to a predetermined sequence, so that an access is made possible to a mirror server with a high priority as soon as the communication resource thereof is reserved. (claim 5)

Also, the resource reservation instructor may instruct the resource reserver to simultaneously make a communication resource reservation per each of the mirror servers, and may instruct the destination changer to change the primary server to the mirror server whose communication resource has been firstly reserved by the resource reserver.

Thus, a next processing is executed when the communication resource is reserved by one mirror server, resulting in shortening the processing time. Also, it is made possible to simultaneously determine the resource reservability for each mirror server, resulting in shortening the processing time compared to the case where the determination per terminal is made sequentially. (claim 6)

Also, the resource reservation instructor may instruct the resource reserver to simultaneously make a communication resource reservation per each of the mirror servers, may select one of the mirror servers whose communication resource has been reserved by the resource reserver according to a predetermined priority, and may instruct the destination changer to change the primary server to the selected mirror server.

Therefore, a mirror server is selected according to a predetermined priority after the communication resource reservation by each mirror server is completed, so that it is made possible to select one of the mirror servers having received the communication resource, based on other factors such as a priority. Also, it is made possible to simultaneously determine the resource reservability for each mirror server, resulting in shortening the processing time compared to the case where the determination per terminal is made sequentially. (claim 7)

Also, the resource reservation instructor may instruct the resource reserver to release the communication resource of the mirror server except for the one which changes the primary server.

Therefore, it is made possible to avoid maintaining the communication resource reservation for the mirror server which is not an accessed destination. (claim 8)

Also, the present invention may further comprise: a service monitor for monitoring an amount of data with the mirror server whose communication resource is reserved by the resource reserver; and the resource reservation instructor may instruct the resource reserver to release the communication resource of the mirror server whose amount of data becomes less than a predetermined amount.

Thus, the communication resource is released when the communication is completed and the data amount runs out. Therefore, it is made possible to avoid maintaining the communication resource reservation even when it is difficult to reserve the communication resource for the mirror server in case the path thereto has less than a predetermined amount of data passing through. (claim 9)

Also, the present invention it may further comprise an address manager for changing the address of the mirror server held in the transferring destination information holder based on an external input.
Therefore, it is made possible to externally change a primary server address and a mirror server address without leaving their setting unchanged. (claim 10)

### Brief Description of the Drawings

Fig.1 is a schematic diagram showing an arrangement of a network to which an embodiment (1) of a data transfer apparatus according to the present invention is applied;
Fig.2 is a block diagram showing an embodiment of arrangement among embodiments (1)-(3) of a data transfer apparatus according to the present invention;
Fig.3 is a block diagram showing a data flow of a data transfer apparatus according to the present invention;
Fig.4 is a flow chart showing an operation embodiment of a receiving portion used in all embodiments of a data transfer apparatus according to the present invention;
Fig.5 is a flow chart showing an operation embodiment of a destination changer used in all embodiments of a data transfer apparatus according to the present invention;
Fig.6 is a flow chart showing an operation embodiment of a transferring destination information reader used in all embodiments of a data transfer apparatus according to the present invention;
Fig.7 is a flow chart showing an operation embodiment of a resource reservation instructor used in an embodiment (1) of a data transfer apparatus according to the present invention;
Fig.8 is a flow chart showing an operation embodiment of a resource reserver used in all embodiments of a data transfer apparatus according to the present invention;
Fig.9 is a block diagram showing an embodiment of an arrangement of a general user terminal and server;
Fig.10 is a flow chart showing an operation embodiment of a receiving portion of a general user terminal and server;
Fig.11 is a flow chart showing an operation embodiment of a transmitting portion of a general LSR, user terminal, and server;
Fig.12 is a block diagram showing an arrangement of a general LSR;
Fig.13 is a flow chart showing an operation embodiment of a receiving portion in a general LSR;
Fig.14 is a flow chart showing an operation embodiment of a resource reserver in a general LSR;
Fig.15 is a schematic diagram showing an arrangement of a network to which embodiments (2) and (3) of a data transfer apparatus according to the present invention are applied;
Fig. 16 is a flow chart showing an operation embodiment of a resource reservation instructor used in an embodiment (2) of a data transfer apparatus according to the present invention;
Fig.17 is a flow chart showing an operation embodiment of a resource reservation instructor used in an embodiment (3) of a data transfer apparatus according to the present invention;
Fig.18 is a schematic diagram showing an arrangement of a network to which an embodiment (4) of a data transfer apparatus according to the present invention is applied;
Fig.19 is a block diagram showing an embodiment of an arrangement of an embodiment (4) of a data transfer apparatus according to the present invention;
Fig.20 is a flow chart showing an operation embodiment of a resource reservation instructor used in an embodiment (4) of a data transfer apparatus according to the present invention;
Fig.21 is a flow chart showing an operation embodiment of a service monitor used in an embodiment (4) of a data transfer apparatus according to the present invention;
Fig.22 is a flow chart showing an operation embodiment of an input/output portion used in an embodiment (4) of a data transfer apparatus according to the present invention;
Fig.23 is a schematic diagram showing an example of a network to which a prior art load balancer is applied;
Fig.24 is a schematic diagram showing an IP address rewriting procedure of a prior art load balancer;
Fig.25 is a schematic diagram showing another example of a network to which a prior art load balance is applied;
Figs.26A-26C are block diagrams showing an example of a prior art data transfer apparatus having communication resource reservation capability; and
Fig.27 is a diagram illustrating a problem of a prior art.

Throughout the figures, like reference numerals indicate like or corresponding components.

### Description of the Embodiments

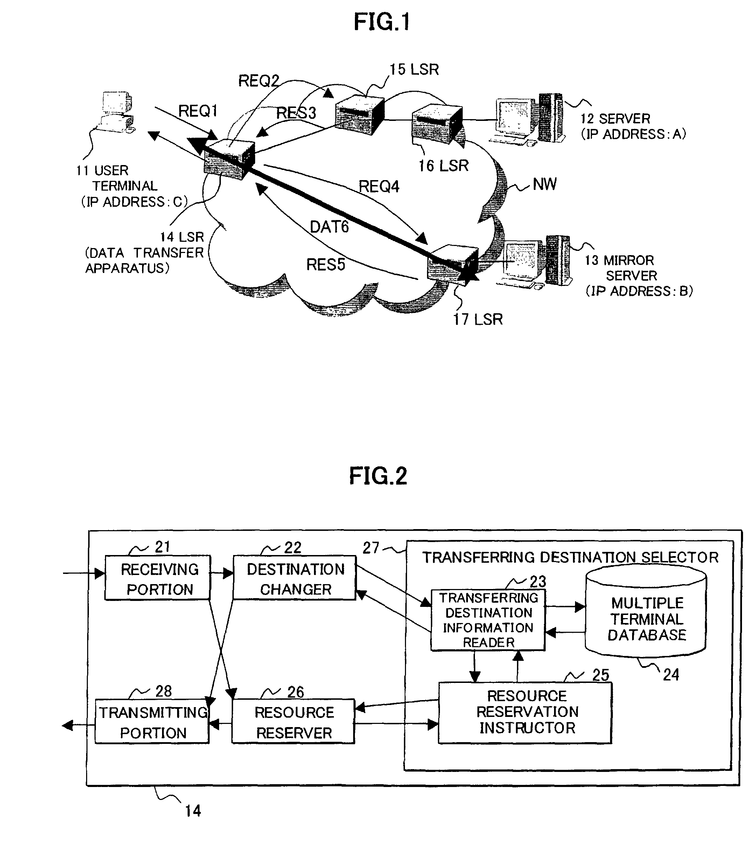

### Embodiment (1): Figs.1-14

Fig.1 shows an arrangement of a network to which an embodiment (1) of a data transfer apparatus according to the present invention is applied. A network NW is composed of a user terminal 11, a server 12, a mirror server 13, an LSR (Label Switching Router) 14, an LSR 15, an LSR 16, and an LSR 17. Among these, the LSR 14 corresponds to the data transfer apparatus according to the present invention.

In case the user terminal 11 requests the server 12 a communication service of a predetermined quality, and the LSR 15 fails to reserve the communication resource, so that the communication service is provided by the mirror server 13, the data transfer procedure on the network NW will be as follows:

Firstly, the user terminal 11 transmits a request REQ1 to the LSR 14. The LSR 14 transmits a request REQ2 to the server 12 in order to request a communication resource reservability.

Here, it is assumed that the LSR 15 cannot reserve the communication resource, so that the LSR 15 transmits a response RES3 that the communication resource is unreservable to the LSR 14. Then, the LSR 14 having received the response RES3 transmits a request REQ4 to the LSR 17 in order to request a confirmation of a communication resource reservability for the mirror server 13.

Here, it is assumed that the communication resource is reservable on a path to the mirror server 13, so that the LSR 17 transmits a response RES5 that the communication resource is reservable to the LSR 14. The LSR 14 having received the response RES5 determines that the communication resource is reservbable for the server 13, thereby transmiting/receiving data DAT6.

Fig.2 shows an arrangement of the LSR 14 according to the embodiment (1) of the present invention, which is composed of a receiving portion 21, a destination changer 22, a transferring destination information reader 23, a multiple terminal database 24, a resource reservation instructor 25, a resource reserver 26, and a transmitting portion 28. A CPU, a ROM, a RAM, and the like can be used for the portions.

It is to be noted that the arrangement of Fig.2 can be applied similarly to the embodiments (2) and (3) which will be described later. Hereinafter, an operation of the arrangement for each embodiment will be described referring to Fig.1.

The receiving portion 21 receives data. The destination changer 22 requests information of a transferring destination terminal to the transferring destination information reader 23 and rewrites a destination IP address and a source IP address included in the data based on the instructions by the transferring destination information reader 23.

The transferring destination information reader 23 reads an IP address of the transferring destination terminal from the multiple terminal database 24 based on the destination IP address designated by the destination changer 22. The multiple terminal database 24 stores IP addresses of servers (hereinafter, referred to as transferring destination terminals) as transferring destination candidates for a primary destination terminal.

In this embodiment (1), the primary destination terminal is the server 12, and the transferring destination terminals are the server 12 and the mirror server 13 only. As for the transferring destination terminals, a plurality of mirror servers may be provided so that the server 12 and the plurality of mirror servers are made the transferring destination terminals.

The resource reservation instructor 25 performs the following processings: (1) transmission of instructions to the resource reserver 26 in order to confirm a resource reservability based on instructions by the transferring destination information reader 23, and (2) transfer of a resource reservability response to the transferring destination information reader 23 upon receipt thereof.

The resource reserver 26 performs the following processings: (1) reservation of communication resource of the LSR 14, (2) response of resource reservation result to the resource reservation instructor 25, and (3) transfer of resource reservation instructions to the LSR 15-LSR 17.

The transferring destination information reader 23, the multiple terminal database 24, and the resource reservation instructor 25 form a transferring destination selector 27 to select a transferring destination terminal based on the request from the destination changer 22 and the confirmation result from the resource reserver 26 as a whole. The transmitting portion 28 transmits output data of the destination changer 22 and the resource reserver 26.

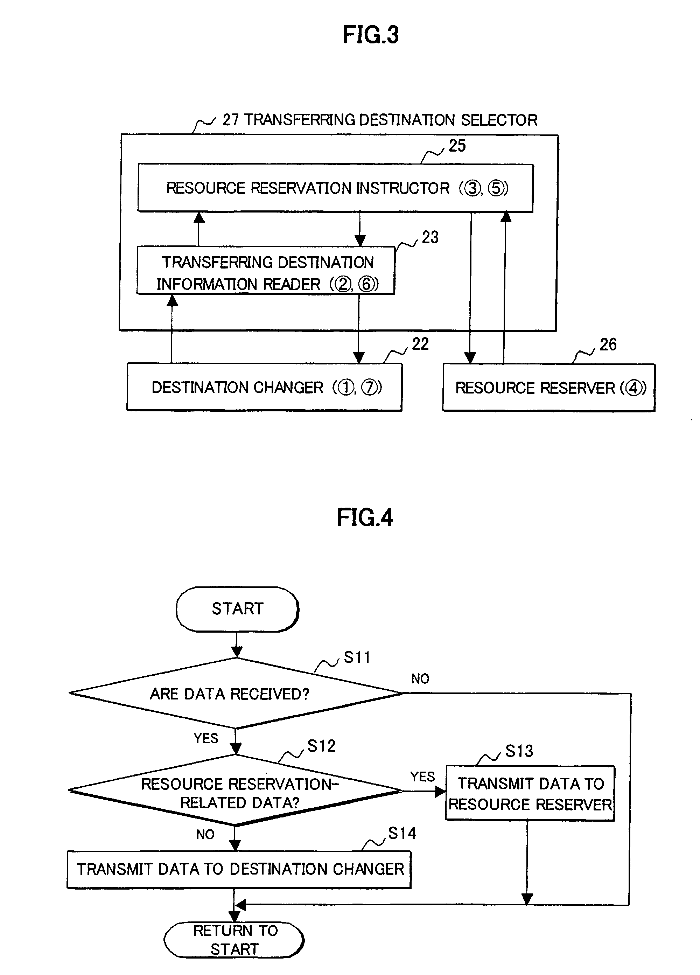

Fig.3 diagrammatically shows an operation flow of the portions shown in Fig.2 where data received by the receiving portion 21 of the embodiment (1) according to the present invention are transmitted from the transmitting portion 28. An overall processing is executed when the portions execute processings in the sequence of reference characters ①-⑦. Operations of the portions will be described referring to flow charts shown in Figs.4-8.

Fig.4 shows an operation of the receiving portion of the embodiment (1) according to the present invention. It is to be noted that Fig.4 is similarly applied to the embodiments (2)-(4) which will be described later.

The receiving portion 21 determines whether or not the data are received (at step S11). When the data are not received, the procedure returns to the start, and re-enters a data waiting state.

Then, the receiving portion 21 determines whether or not the received data are related to resource reservation (at step S12). If they are resource reservation-related data, the receiving portion 21 transmits the received data to the resource reserver 26, and the procedure returns to the start (at step S13). Otherwise the receiving portion 21 transmits the data to the destination changer 22, and the procedure returns to the start (at step S14).

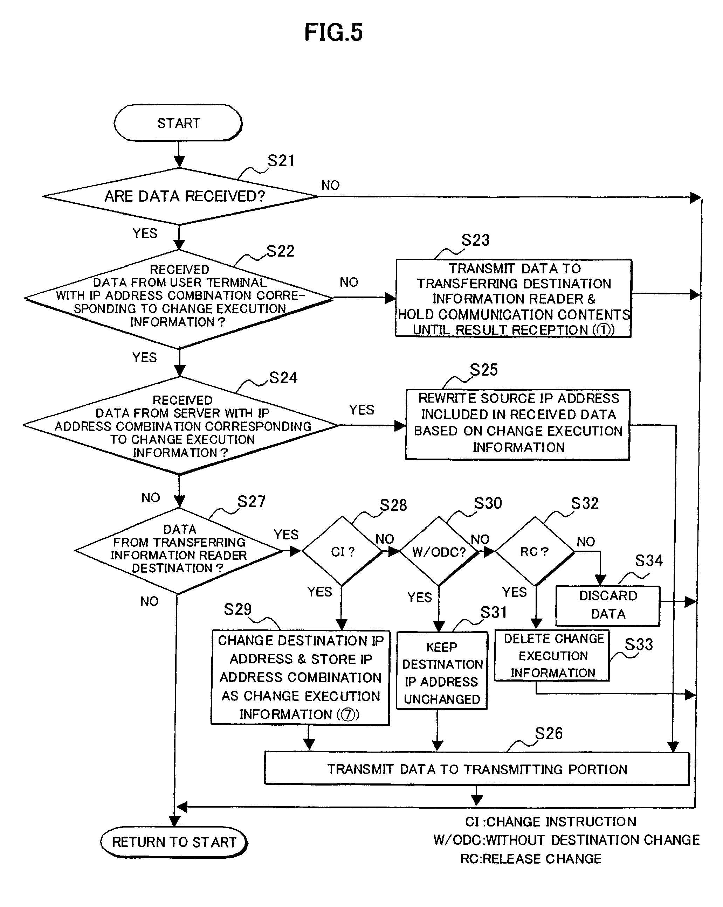

Fig.5 is a flow chart showing an operation of the destination changer 22 of the embodiment (1) according to the present invention. It is to be noted that Fig.5 is also applied similarly to the embodiments (2)-(4) which will be described later.

The destination changer 22 determines whether or not the data are received (at step S21). If they are unreceived, the procedure returns to the start and enters the data waiting state.

Then, the address changer 22 determines whether or not the received data are transmitted from the user terminal 11, and the destination IP address and the source IP address included in the data are the respective IP addresses of response data from a selected transferring destination terminal (the mirror server 13 in case the data are transmitted to the mirror server 13). For this purpose, the destination changer 22 determines whether or not a combination of the destination IP address and the source IP address included in the data corresponds to a combination of the destination IP address and the source IP address held by the destination changer 22 (hereinafter, referred to as change execution information, which will be described later) (at step S22).

When the received data are transmitted from the user terminal 11 and the destination IP address and the source IP address included in the data do not correspond to the change execution information, the destination changer 22 transmits the data to the transferring destination information reader 23 and waits for the result (at step S23 and ① of Fig.3). When the result is returned, the procedure returns to the start.

Then, the destination changer 22 determines whether or not the received data are transmitted from the selected transferring destination terminal (e.g. mirror server 13), and the destination IP address and the source IP address included in the data correspond to the change execution information (at step S24).

When the received data are returned from the selected transferring destination terminal (e.g. mirror server 13), and the destination IP address and the source IP address included in the data correspond to the change execution information, the destination changer 22 rewrites the source IP address included in the data to the IP address of the server 12, based on the destination IP address and the source IP address written in the change execution information, in order to make the user 11 see as if it is transmitting/receiving data to/from the server 12 (at step S25). After rewriting the data, the destination changer 22 transmits the rewritten data to the transmitting portion 27 (at step S26), and the procedure returns to the start.

When the data received at step S24 are not the transmitted data from the selected transferring destination terminal (e.g. mirror server 13), or when it is determined that the IP addresses do not correspond to the change execution information, the destination changer 22 further determines whether or not the data are from the transferring destination information reader 23 (at step S27). If not the case, the procedure returns to the start.

When it is determined that the data are from the transferring destination information reader 23, the destination changer 22 determines whether or not the data are the destination change instructions for the data (at step S28). If they are the destination change instructions, the destination changer 22 further stores a combination of the destination IP address (e.g. IP address of server 12) and the source IP address (e.g. IP address of user terminal 11) as the above-mentioned change execution information, and rewrites the destination IP address into the IP address of the selected transferring destination terminal (e.g. mirror server 13) (at step S29 and ⑦ of Fig.3). Then, the procedure continues to step S26 to transmit the data with the rewritten IP address to the transmitting portion 28.

When it is found at step S28 that the data are not the destination change, the destination changer 22 determines whether or not the data are instructions without destination change (at step S30). When it is found that the data are responses without destination change, the procedure continues to step S26 without changing the destination IP address and the source IP address (at step S31) to transmit the data with the written IP address to the transferring portion 28.

When it is found that the data are not the instructions without destination change, the destination changer 22 determines whether or not the data are instructions for destination change release (at step S32). When it is found that the data are the instructions for the destination change release, the destination changer 22 deletes the stored change execution information for a combination of a designated destination IP address and source IP address (at step S33), otherwise the data are discarded (at step S34), and the procedure returns to the start.

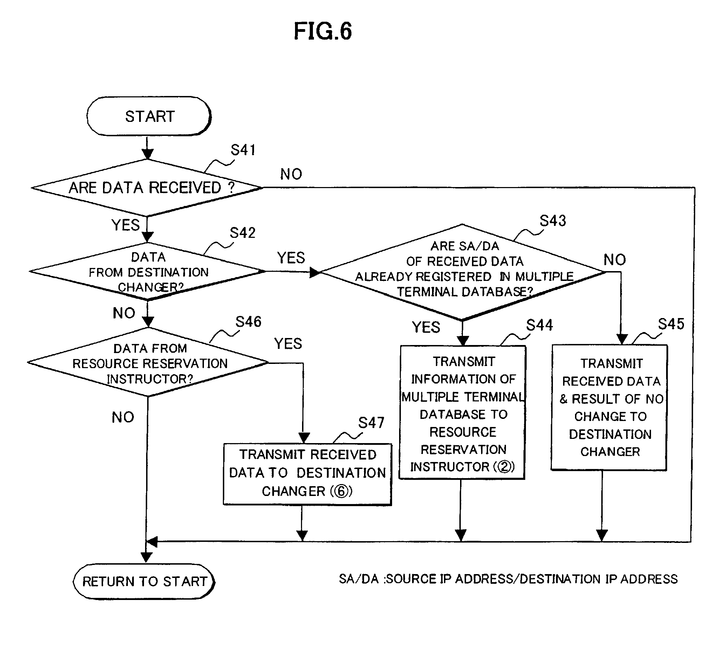

Fig.6 is a flow chart showing an operation of the transferring destination information reader 23 of the embodiment (1) according to the present invention. It is to be noted that Fig.6 is also applied similarly to the embodiments (2)-(4) which will be described later.

The transferring destination information reader 23 determines whether or not the data are received (at step S41). When the data are not received, the procedure returns to the start and enters the data waiting state.

Then, the transferring destination information reader 23 determines whether or not the received data are from the destination changer 22 (at step S42).

When it is determined that the data are from the destination changer 22, the transferring destination information reader 23 reads the multiple terminal database 24 to determine whether or not the destination IP address of the data is registered (at step S43).

When it is determined that the destination IP address is registered, the transferring destination information reader 23 transmits the information of the transferring destination terminals (e.g. server 12 and mirror server 13) associated with the primary destination terminal (e.g. server 12) to the resource reservation instructor 25 (at step S44 and ② of Fig.3), and the procedure returns to the start. Otherwise the transferring destination information reader 23 returns the information without primary destination terminal change to the destination changer 22 (at step S45) together with the data, and the procedure returns to the start.

When it is determined at step S42 that the data are not from the destination changer 22, the transferring destination information reader 23 determines whether or not the data are from the resource reservation instructor 25 (at step S46). When the data are not from the resource reservation instructor 25, the procedure returns to the start.

When the data are from the resource reservation instructor 25, the destination information reader 23 transmits the received data to the destination changer 22 (at step S47 and ⑥ of Fig.3), and the procedure returns to the start.

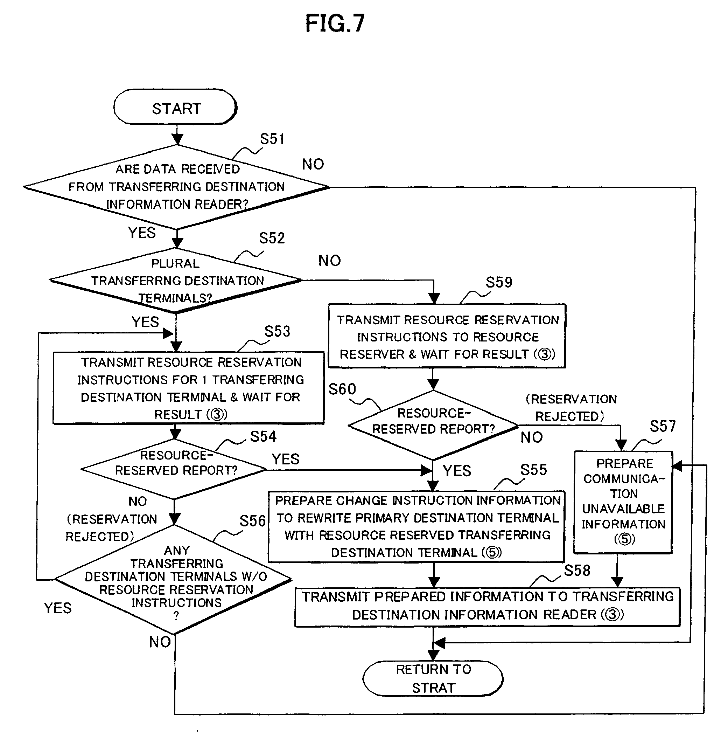

Fig.7 is a flow chart showing an operation of the resource reservation instructor 25 of the embodiment (1) according to the present invention.

The resource reservation instructor 25 determines whether or not the data are received from the transferring destination information reader 23 (at step S51). When the data are not received, the procedure returns to the start and enters the data waiting state. Next, The resource reservation instructor 25 determines whether or not there are plural transferring destination terminals read by the transferring destination information reader 23 (at step S52).

In the presence of the plural primary destination terminals, the multiple terminal database 24 preliminarily stores a predetermined priority among the plural transferring destination terminals. When it is determined at step S52 that there are plural transferring destination terminals, the resource reservation instructor 25 transmits confirmation instructions of resource reservability to the resource reserver 27 as for a certain transferring destination terminal according to the predetermined priority, and waits for the result (at step S53 and ③ of Fig.3).

When a response to the confirmation instructions from the resource reserver 27 is received, the resource reservation instructor 25 determines the resource reservability based on the responded result (at step S54). When the determination results are resource-reservable, the resource reservation instructor 25 selects a resource reserved terminal among the transferring destination terminals, and prepares change instruction information for instructing to rewrite the primary destination terminal (e.g. the server 12) to the selected transferring destination terminal (e.g. the mirror server 13) (at step S55).

When the determination results is resource-unreservable, the resource reservation instructor 25 determines whether or not there are any terminals for which the resource reservability is not confirmed among the transferring destination terminals (at step S56), so that in the presence of terminals for which the resource reservability is not confirmed, the procedure returns to step S53 in order to confirm the resource reservability based on the next priority.

For example, when a rejection response that the resource is unreservable is received through the resource reserver 26 from the LSR 15 which has firstly confirmed the resource reservability of the server 12, the resource reservation instructor 25 determines at step S54 that the resource reservation has been unsuccessful, so that the resource reservability will be confirmed for the mirror server 13 that is the next transferring destination terminal.

Then, upon obtaining a response from the mirror server 13 that the resource is reservable, the resource reservation instructor 25 determines at step S54 that the resource reservation has been successful, and selects the mirror server 13.

When it is determined at step S56 that the resource reservabilities are confirmed for all of the transferring destination terminals, which indicates that the responses that the resource is unreservable for all of the transferring destination terminals are received, the resource reservation instructor 25 prepares information that communication is unavailable (at step S57).

When the change instruction information or the communication unavailable information is prepared respectively at step S55 or step S57, the resource reservation instructor 25 transmits the prepared information as a response to the destination information reader 23 (at S58 step and ⑤ of Fig.3). After the transmission thereof, the procedure returns to the start.

When it is determined at step S52 that there is one transferring destination terminal, the resource reservation instructor 25 transmits confirmation instructions of resource reservability to the resource reserver 27 and waits for the result (at S59 step and ③ of Fig.3).

When the response to the confirmation instructions is received from the resource reserver 27, the resource reservation instructor 25 determines the resource reservability based on the responded result in the same way as in step S54 (at step S60), and the procedure continues to step S55 or step S57 depending on the determination result, so that the preparation and the transmission of the change instruction information or the communication unavailable information as mentioned above are performed.

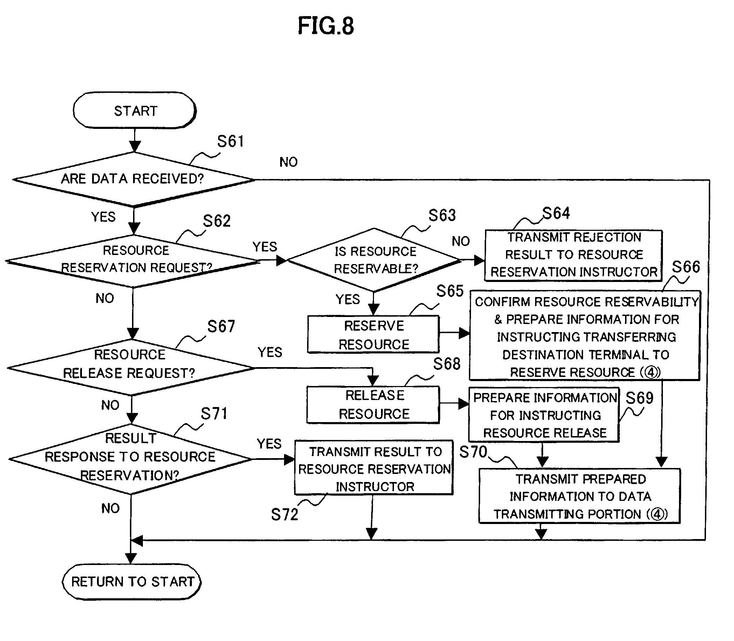

Fig.8 is a flow chart showing an operation of the resource reserver 27 of the embodiment (1) according to the present invention. It is to be noted that this Fig.8 is also applied to the embodiments (2) and (3) which will be described later.

The resource reserver 27 determines whether or not the data are received (at step S61). When the data are not received, the procedure returns to the start and enters the data waiting state.

Next, the resource reseryer 27 determines whether or not the received data are the resource reservation requests (at step S62). When the received data are the resource reservation requests, the resource reserver 27 determines whether or not the communication resource of the LSR 14 itself is reservable (at step S63).

When it is determined that the resource is unreservable, since the communication resource is unreservable, needless to confirm the communication resource reservability of other LSR's at that time, the resource reserver 27 prepares information of the resource unreservable to be transmitted to the resource reservation instructor 25 (at step S64).

When it is determined at step S63 that the resource is reservable, the resource reserver 27 reserves the communication resource of the LSR 14 (at step S65). Then, the resource reserver 27 prepares the information for instructing the resource reservation to the transferring destination terminal selected by the resource reservation instructor 25 and the resource reservability information (at step S66).

When it is determined at step S62 that the data are not the resource reservation requests, the resource reserver 27 determines whether or not the data are resource release requests (at step S67). When it is determined that the data are the resource release requests, the resource reserver 27 releases the communication resource of the LSR 14 (at step S68).

Then, the resource reserver 27 prepares the information for instructing the release of the communication resource to the LSR at the next location on the communication path (at step S69). After preparing information at step S66 or step S69, the resource reserver 27 transmits the prepared information to the transmitting portion 28 (at step S70).

When it is determined at step S67 that the data are not the resource release requests, the resource reserver 27 determines whether or not the data are the result response to the resource reservation (at step S71). In case of the result response to the resource reservation, the resource reserver 27 transfers the result response to the resource reservation instructor 25 (at step S72), and the procedure returns to the start. Otherwise the procedure returns to the start without any specific processing.

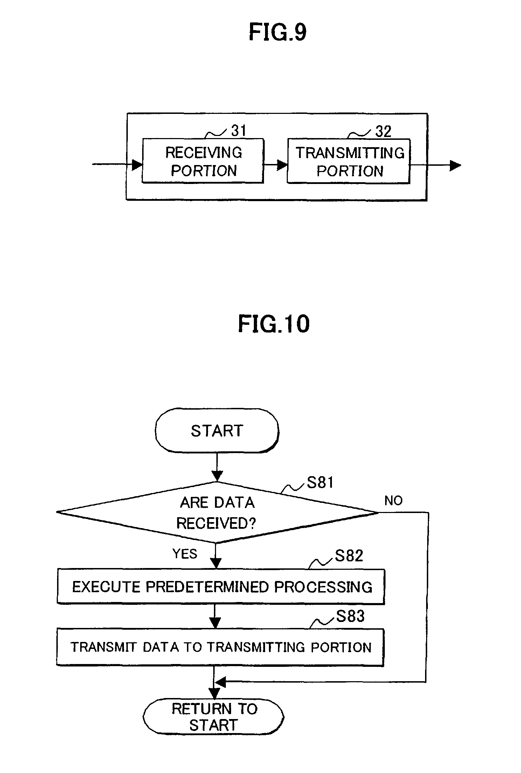

Fig.9 shows an arrangement common to the user terminal 11, the server 12, and the mirror server 13 in all of the embodiments. A receiving portion 31 receives the data and the signals, and a transmitting portion 32 transmits the data and the signals.

Fig.10 is a flow chart showing an operation of the receiving portion 31 shown in Fig.9.

The receiving portion 31 determines the presence of a data reception (at step S81). When it is determined that there is no data reception, the procedure returns to the start. Otherwise the receiving portion 31 executes a predetermined processing for the received data (at step S82) and transmits the data to the transmitting portion 32 (at step S83).

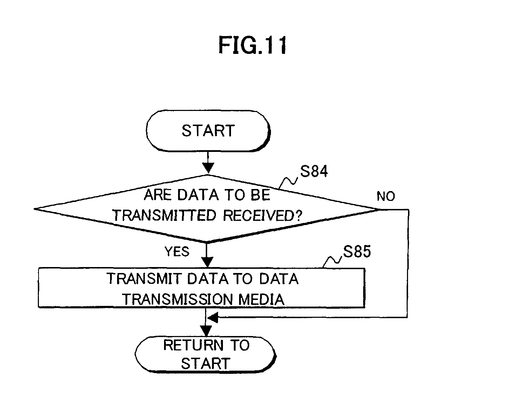

Fig.11 is a flow chart showing an operation of the transmitting portion 32 shown in Fig.9. It is to be noted that Fig.11 is applied not only to the user terminal 11, the server 12, and the mirror server 13, but also to the LSR 14-LSR 17.

The transmitting portion 32 determines the presence of the data reception (at step S84). When it is determined that there is no reception of the data to be transmitted, the procedure returns to the start. Otherwise the transmitting portion 32 transmits the received data to the servers and the like that assume the destination (at step S85).

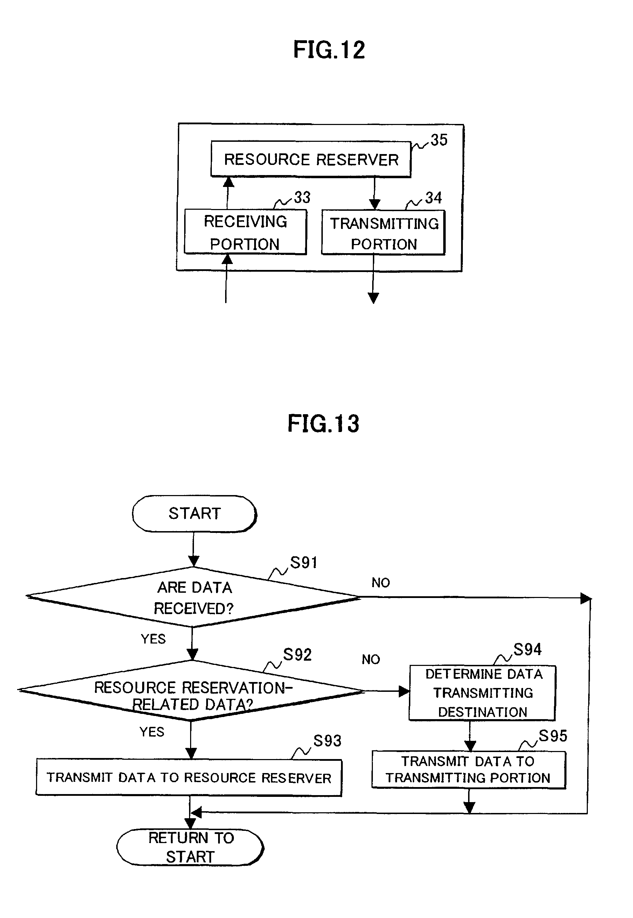

Fig.12 shows a general arrangement of the LSR 15-LSR 17 used in the embodiment (1). It is to be noted that this Fig.12 is also applied similarly to the LSR's used in the embodiments (2)-(4) which will be described later.

A receiving portion 33 receives the data and the signals, which are transmitted by a transmitting portion 34. A resource reserver 35 executes the followings: (1) communication resource reservation, (2) response of the resource reservation result, and (3) transfer of the resource reservation instructions. [0078]

For example, when the LSR 15 receives the resource reservation instructions from the LSR 14, the resource reserver 35 of the LSR 15 executes as follows: (1) reserves resource for the LSR 15 itself, (2) responds to the LSR 14 with the result that the resource reservation was successful, and (3) transfers the resource reservation instructions to the next LSR 16. The LSR 16 having received the resource reservation instructions executes the same processings, so that the resource reservation within the network NW is performed.

Fig.13 is a flow chart showing an operation of the receiving portion 33. It is to be noted that the operation of the transmitting portion 34 is the same as that shown in Fig.11.

The receiving portion 33 firstly determines the presence of the data reception (at step S91). When it is determined that there is no data reception, the procedure returns to the start. Otherwise the receiving portion 33 determines whether or not the received data are related to the resource reservation (at step S92).

When it is determined that the data are related to the resource reservation, the receiving portion 33 transmits the received data to the resource reserver 35 (at step S93), and the procedure returns to the start. Otherwise it is the normal data reception, so that the receiving portion 33 determines the transmitting destination of the data (at step S94) and transmits the data to the transmitting portion 34 (at step S95), and the procedure returns to the start.

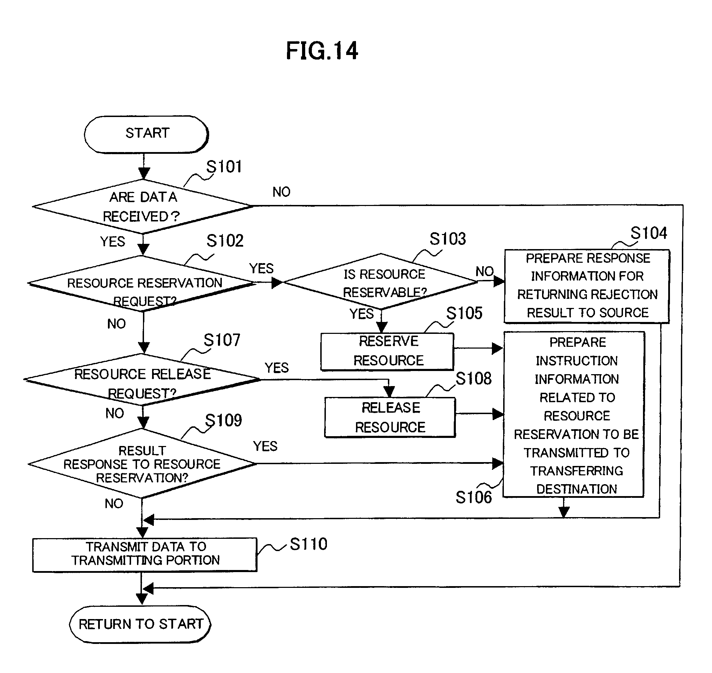

Fig.14 is a flow chart showing an operation of the resource reserver 35.

The resource reserver 35 determines the presence of the data reception (at step S101). When it is determined that there is no data reception, the procedure returns to the start. Otherwise the resource reserver 35 determines whether or not the received data are the resource reservation requests (at step S102).

When it is determined that the data are the resource reservation requests, the resource reserver 35 determines whether or not the resource is reservable in the LSR where the resource reserver 35 is included (at step S103). For example, when there is a resource reservation request from the LSR 14, the resource reserver 35 of the LSR 15 determines whether or not the resource is reservable in the LSR 15.

When it is determined that the resource is unreservable, the resource reserver 35 prepares response information for returning the result response that rejects the resource reservation to the source terminal (at step S104). For example, in case of a response to the resource reservation instructions from the LSR 14, the LSR 14 forms the source of the data for which the response information should be prepared.

When it is determined at step S103 that the resource is reservable, the resource reserver 35 reserves the resource in the LSR where the resource reserver 35 is included (at step S105). Then, the resource reserver 35 rewrites the information of the resource reservation instructions to be transferred to the next LSR (at step S106). For example, in case of the processing of the LSR 15, since the next LSR to be transferred is the LSR 16, the LSR 15 rewrites the resource reservation instruction information to be transferred to the LSR 16.

When it is determined at step S102 that the data are not the resource reservation requests, the resource reserver 35 determines whether or not the received data are the resource release request (at step S107). When it is determined that the data are the resource release requests, the resource reserver 35 releases the resource for the LSR where the reserver 35 is included (at step S108), and rewrites the resource release requests to be transferred to the next LSR (at step S106).

When it is determined at step S107 that the data are not the resource release requests, the resource reserver 35 determines whether or not the received data are the result responses to the resource reservation (at step S109). When it is determined that the data are the result responses to the resource reservation, the resource reserver 35 rewrites the result responses to be transferred to the next LSR (at step S106). For example, in case of the processing of the LSR 15, since the result responses are transferred next to the LSR 14, the responses are rewritten to be transferred to the LSR 14.

When it is determined at step S109 that the data are not the result responses for the resource reservation, or when information to be transmitted to the transferring destination is prepared at step S106, the resource reserver 35 transmits the received data or the prepared data to the transmitting portion 34 (at step S110), and the procedure returns to the start.

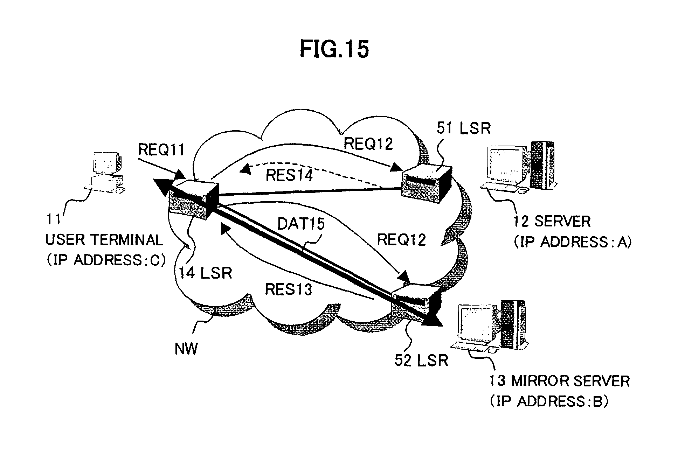

### Embodiment (2): Figs. 15-16

Fig.15 is shows an arrangement of a network to which an embodiment (2) of a data transfer apparatus according to the present invention is applied. It is to be noted that this Fig.15 is similarly applied to the embodiment (3) which will be described later. The network NW is composed of the user terminal 11, the server 12, the mirror server 13, and the LSR 14, as the same arrangement of the embodiment (1), as well as an LSR 51 and an LSR 52.

Hereinafter, a case is assumed where upon the user terminal 11 requesting a communication service of a predetermined quality to the server 12, the LSR 14 transmits the resource reservation requests to the server 12 and the mirror server 13, and upon firstly receiving a response from the LSR 52 connected to the mirror server 13 that the resource is reservable, the user terminal 11 undergoes the communication service from the mirror server 13. In such a case, the data transfer procedure on the network NW will be as follows:

Firstly, the user terminal 11 transmits a request REQ11 to the LSR 14. The LSR 14 transmits a request REQ12 in order to request confirmation of the communication resource reservability to the server 12 and the mirror server 13.

Here, it is assumed that responses RES13 and RES14 to the request REQ12 are respectively returned from the LSR 52 and the LSR 51. It is also assumed that the response RES13 is received by the LSR 14 earlier than the response RES14, and that the response RES13 is a response that the resource is reservable. In this case, the LSR 14 determines that the communication resource is firstly reserved for the server 13, thereby transmitting/receiving the data DAT15.

As having been described in the above-mentioned embodiment (1), the arrangement of the LSR 14 in the embodiment (2) is as shown in Fig.2. Likewise, the operation of the receiving portion 21 thereof is as shown in Fig.4, the operation of the destination changer 22 is as shown in Fig.5, the operation of the transferring destination information reader 23 is as shown in Fig.6, and the operation of the resource reserver 26 is as shown in Fig.8.

Also, the arrangements of the user terminal 11, the server 12, and the mirror server 13 are as shown in Fig.9. Likewise, the operation of the receiving portion 31 is as shown in Fig.10, and the operation of the transmitting portion 32 is as shown in Fig.11. The arrangement and the operation of the general LSR are as shown respectively in Figs.12 and 13.

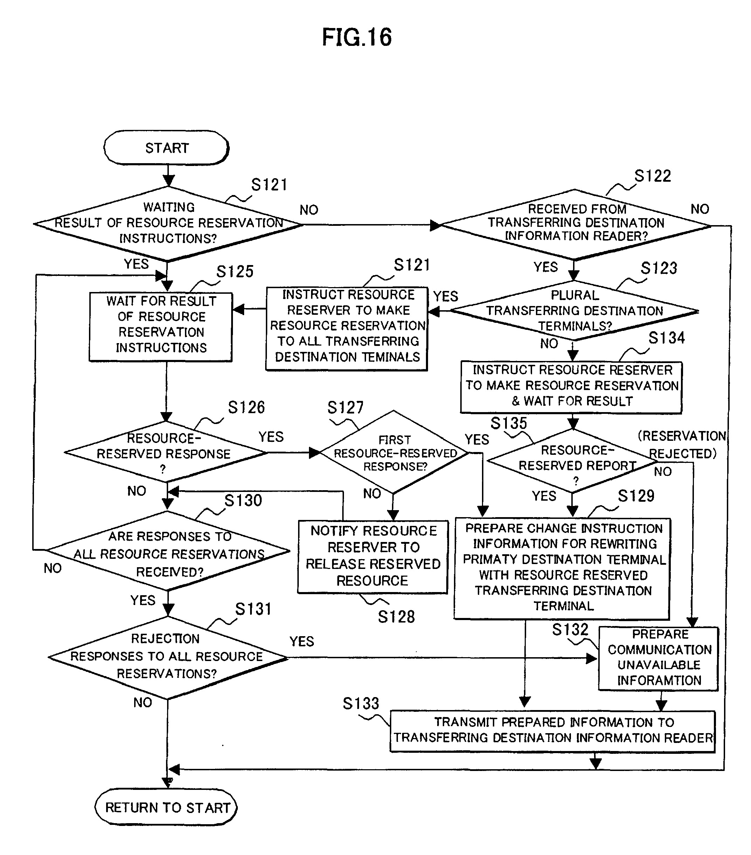

In the embodiment (2), since only the operation of the resource reservation instructor 25 is different from the embodiment (1), this will be described referring to Fig.16.

Firstly, the resource reservation instructor 25 determines whether or not it is in a state of waiting a result of the resource reservation instructions already transmitted. When it is determined that it is a result waiting state, the procedure continues to step S125 which will be described later (at step S121).

When it is determined that it is not in the result waiting state, the resource reservation instructor 25 determines whether or not the data are received from the transferring destination information reader 23 (at step S122). When it is determined that the data are not received, the procedure returns to the start.

When it is determined that the data are received from the transferring destination information reader 23, the resource reservation instructor 25 determines whether or not there are plural transferring destination terminals based on the received data (at step S123). When it is determined that there are plural transferring destination terminals, the resource reservation instructor 25 instructs the resource reserver 26 to reserve resources of all of the transferring destination terminals (at step S124).

Next, the resource reservation instructor 25 waits for the result to the transmitted resource reservation instructions from the resource reserver 26 (at step S125), and determines whether or not a resource-reserved response is received (at step S126). When it is determined that the resource-reserved response is received, the resource reservation instructor 25 determines whether or not the received response is the first resource-reserved response (at step S127). This is to select the transferring destination terminal from which the first response that the resource is reservable is obtained.

For example, the resource reservation instructor 25 firstly transmits the resource reservation instructions simultaneously to the server 12 and the mirror server 13 at step S124. When the response that the resource is reservable is firstly obtained from the mirror server 13, the resource reservation instructor 25 determines that it is the resource-reserved response at step S126, and determines at step S127 that its is the first resource-reserved response.

Thereafter, even when the resource reservation instructor 25 obtains a resource-reserved response from the server 12, the resource reservation instructor 25 determines that it is not the first response to the resource reservation instructions at step S127.

When it is not determined at step S127 that the response is the first resource-reserved response, the resource reservation instructor 25 notifies the resource reservater 26 of releasing the resource of the resource reservation already executed (at step S128), and the procedure returns to step S130.

When it is determined that it is the first resource-reserved response, the resource reservation instructor 25 prepares change instruction information for rewriting the information of the primary destination terminal within the data to that of the resource-reserved transferring destination terminal (at step S129).

When it is determined at step S126 that the resource-reserved response is not received, the resource reservation instructor 25 determines whether or not the responses for all of the resource reservation instructions are received (at step S130). If it is not the case, the procedure returns to step S125 in order to receive responses to all of the resource reservation instructions.

When the responses to all of the resource reservation instructions are received, the resource reservation instructor 25 determines whether or not all of the received responses are rejection responses to the resource reservation requests (at step S131). When it is determined that not all of the responses are the rejection response, which indicates that the processings were completed for all of the resource-reserved transferring destination terminals and the resource-unreserved transferring destination terminals, the procedure returns to the start.

When it is determined that all of the received responses are the rejection response, which indicates that the resource reservation has failed in all of the transferring destination terminals, the resource reservation instructor 25 prepares a communication unavailable information (at step S132).

Then, after the information is prepared respectively at step S129 and step S132, the prepared information is transmitted to the transferring destination information reader 23 (at step S133), and the procedure returns to the start.

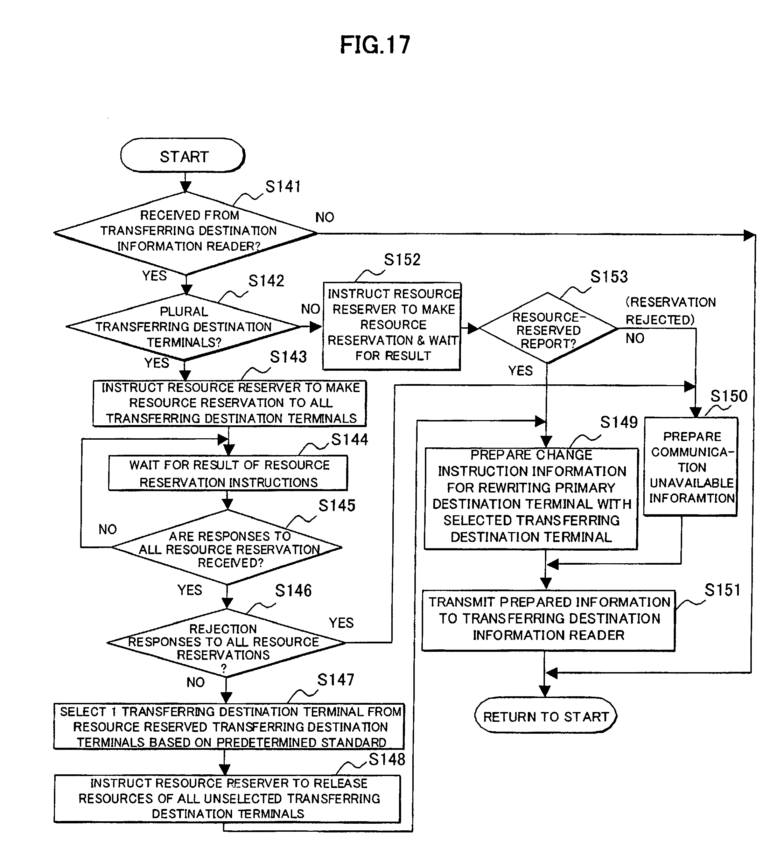

### Embodiment (3): Fig.17

Fig.15 is applied, in the same way as in the embodiment (2), to the network arrangement in an embodiment (3) according to the present invention.

As in the embodiment (1), the arrangement of the LSR 14 in the embodiment (3) is as shown in Fig.2. Likewise, the operation of the receiving portion 21 is as shown in Fig.14, the operation of the destination changer 22 is as shown in Fig.5, the operation of the transferring destination information reader 23 is as shown in Fig.6, and the operation of the resource reserver 26 is as shown in Fig.8.

Also, the arrangements of the user terminal 11, the server 12, and the mirror server 13 are as shown in Fig.9. Likewise, the operation of the receiving portion 31 is as shown in Fig.10, the operation of the transmitting portion 32 is as shown in Fig.11. The arrangement and the operation of the general LSR are as shown respectively in Figs.12 and 13.

In the embodiment (3), since only the operation of the resource reservation instructor 25 different from the embodiment (1), this will be described referring to Fig.17.

Firstly, steps S141-S144 corresponding to steps S122-S125 shown in the embodiment (2) are executed.

Then, the resource reservation instructor 25 determines whether or not the responses to all of the resource reservation instructions are received (at step S145). When it is determined that not all of the responses are received, the procedure returns to step S144 in order to receive the responses to all of the resource reservation instructions.

When the responses to all of the resource reservation instructions are received, the resource reservation instructor 25 determines whether or not all of the received responses are the rejection responses to the resource reservation requests (at step S146).

When it is determined that not all of the responses are the rejection response, namely, that the resource-reserved transferring destination terminals exist, the resource reservation instructor 25 selects one transferring destination terminal from among the resource-reserved transferring destination terminals based on a predetermined priority (at step S147).

Then, the resource reservation instructor 25 is no longer required to continue the resource reservation to all of the unselected transferring destination terminals, thereby transmitting the instructions for the resource release to the resource reserver 26 (at step S148).

Next, the resource reservation instructor 25 prepares change instruction information for rewriting the information of the primary destination terminal within the data to that of the resource-reserved transferring destination terminal (at step S149).

When it is determined at step S146 that all of the received responses are the rejection response, which indicates that the resource reservation has failed in all of the transferring destination terminals, the resource reservation instructor 25 prepares a communication unavailable information (at step S150).

Then, after the information is prepared respectively at step S149 and step S150, the prepared information is transmitted to the transferring destination information reader 23 (at step S151), and the procedure returns to the start.

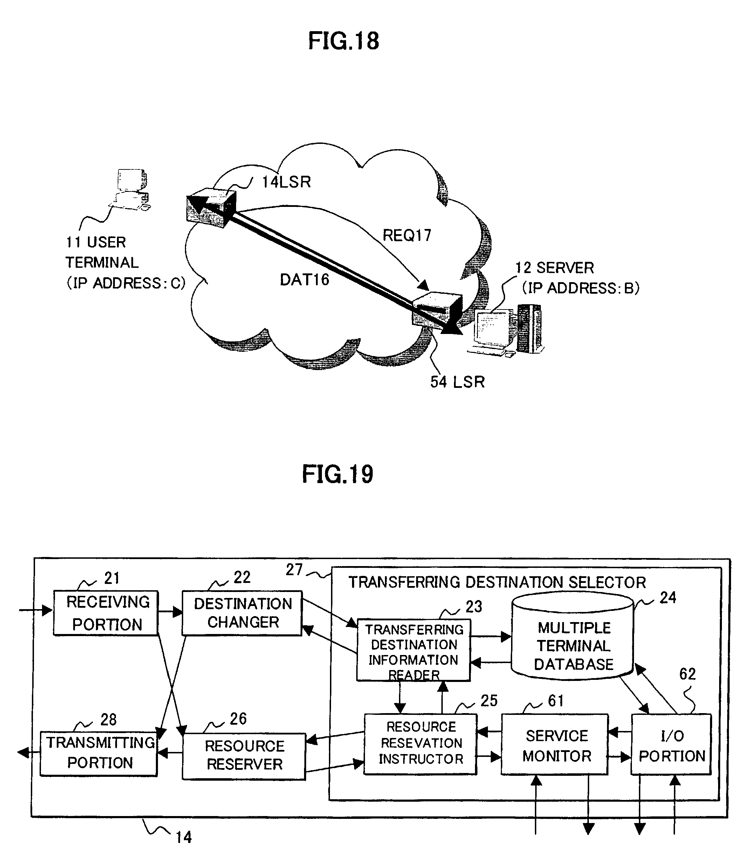

### Embodiment (4): Figs.18-22

Fig.18 shows an arrangement of a network to which an embodiment (4) of a data transfer apparatus according to the present invention is applied. The network NW is composed of the user terminal 11, the server 12, the LSR 14, and an LSR 54.

In the embodiment (4), after the transmission/reception of data DAT16 is performed by selecting one data transmitting destination from among the transferring destination terminals by the procedures of the embodiments (1)-(3), and the transmission/reception amount of the data DAT16 runs out, or reduced to a value less than a predetermined value, the LSR 14 releases the communication resource by transmitting a resource release REQ17.

Fig.19 shows an arrangement of the LSR 14 in the embodiment (4) according to the present invention which is the arrangement shown in Fig.2 to which a service monitor 61 and an input/output portion (I/O portion) 62 are added. Hereinafter, an operation of this arrangement will be described.

The service monitor 61 monitors the transmission/reception amount of the data and transmits the monitored result to the resource reservation instructor 25 or the input/output portion 62. The input/output portion 62 displays and changes the transferring destination terminal information which is registered in the multiple terminal database 24 and displays the transmission/reception amount received from the service monitor 61.

As described in the above-mentioned embodiment (1), the arrangement of the LSR 14 in the embodiment (4) is as shown in Fig.2. Likewise, the operation of the receiving portions 21 is as shown in Fig.4, the operation of the destination changer 22 is as shown in Fig.5, the operation of the transferring destination information reader 23 is as shown in Fig.6, and the operation of the resource reserver 26 is as shown in Fig.8.

Also, the arrangements of the user terminal 11, the server 12, and the mirror server 13 are as shown in Fig.9. Likewise, the operation of the receiving portion 31 is as shown in Fig.10, the operation of the transmitting portion 32 is as shown in Fig.11. The arrangement and the operation of the general LSR are as shown respectively in Figs.12 and 13.

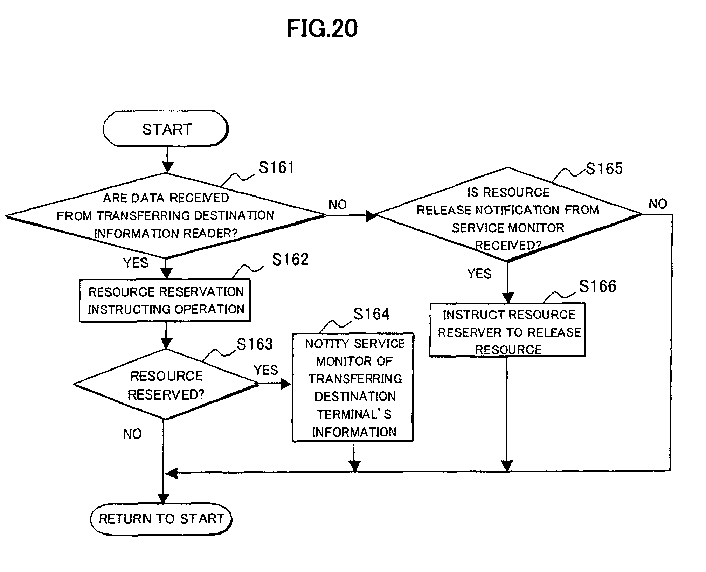

In the embodiment (4), since only the operations of the resource reservation instructor 25, the service monitor 61, and the input/output portion 62 are different from the embodiment (1), these will be described referring to Figs.20-22.

Fig.20 is a flow chart showing an operation of the resource reservation instructor 25 of the mbodiment (4).

Firstly, the resource reservation instructor 25 determines whether or not the data are received from the transferring destination information reader 23 (at step S161). When it is determined that the data are received, the resource reservation instructor 25 executes resource reservation instruction operations to the resource reserver 26 as shown in Figs.7, 16, and 17 of the respective embodiments (1)-(3) (at step S162).

The resource reservation instructor 25 determines whether or not the resource reservation is made for the resource reservation instructing operation (at step S163). When it is determined that the resource reservation is made, the resource reservation instructor 25 notifies the service monitor 61 of the information of the transferring destination terminal which has made the resource reservation (at step S164), and the procedure returns to the start. When it is determined at step S163 that the resource reservation is not performed, the procedure returns to the start without executing any specific processing.

When it is determined at step S161 that the data are not received, the resource reservation instructor 25 determines whether or not a resource release notification is received from the service monitor 61 (at step S165). When it is not determined that the notification is received, the procedure returns to the start.

When it is determined that the resource release notification is received, the resource reservation instructor 25 instructs the resource release to the resource reserver 26 (at step S166), and the procedure returns to the start.

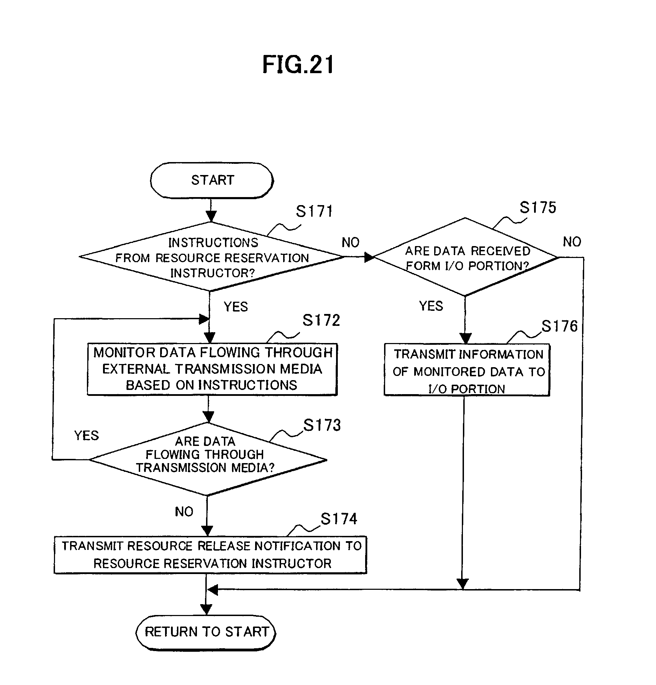

Fig.21 is a flow chart showing an operation of the service monitor 61 of the embodiment (4).

Firstly, the service monitor 61 determines whether or not there are resource reservation instructions from the resource reservation instructor 25 (at step S171). When it is determined that there are the instructions, the service monitor 61 monitors the data amount flowing through transmission media based on the instructions (at step S172).

Then, the service monitor 61 determines whether or not the data are flowing through the transmission media (at step S173). When it is determined that the data are flowing, the procedure returns to step S172. When it is determined that the data are not flowing, the service monitor 61 transmits the resource release notification to the resource reservation instructor 25 and the procedure returns to the start (at step S174).

When it is determined at step S171 that there are no instructions from the resource reservation instructor 25, the service monitor 61 determines whether or not the data are received from the input/output portion 62 (at step S175).

When it is determined that the data are received from the input/output portion 62, the service monitor 61 transmits the monitored data amount to the input/output portion 62, and the procedure returns to the start (at step S176). When it is determined that the data are not received, the procedure returns to the start without any specific processing.

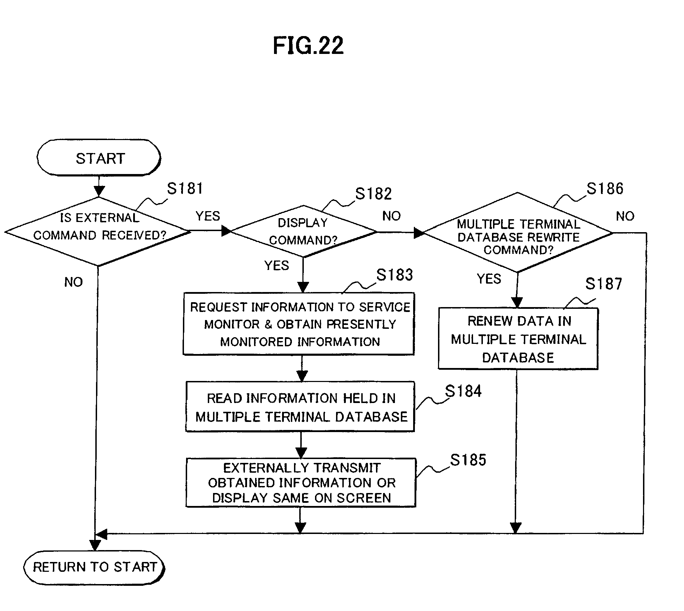

Fig.22 is a flow chart showing an operation of the input/output portion 62 of this embodiment (4).

Firstly, the input/output portion 62 determines whether or not an external command is received (at step S181). When it is determined that the external command is not received, the procedure returns to the start. When it is determined that the external command is received, the input/output portion 62 determines whether or not the received command is a display command (at step S182).

When it is determined that the command is the display command, the input/output portion 62 transmits a request of data amount information to the service monitor 61, and responsively obtains the information of the data amount monitored by the service monitor 61 (at step S183). Then the input/output portion 62 reads the information of the transferring destination terminal in the multiple terminal database 24 (at step S184), and displays the obtained information and the read information on a screen, and transmits same to a requesting party (at step S185), and the procedure returns to the start.

When it is determined at step S182 that the external command is not the display command, the input/output portion 62 then determines whether or not the received command is a rewrite command to the multiple terminal database 24 (at step S186). When it is determined that the command is not the rewrite command, the procedure returns to the start without any specific processing.

When it is determined that the command is the rewrite command, the input/output portion 62 rewrites the data related to the transferring destination terminal in the multiple terminal database 24 according to the rewrite command (at step S187), and the procedure returns to the start.

As described above, a data transfer apparatus according to the present invention is arranged such that upon communicating with a predetermined quality, it is made possible that the data are transmitted to the transferring destination terminal in which the communication resource is reserved. For example, in case of an access to a communication service of a predetermined quality from a server, mirror servers and the like can be selected depending on a reservation state of the communication resource.

Thus, it is made possible to avoid such a situation that the communication service of the predetermined quality cannot be accessed after the mirror servers and the like are selected, so that the communication quality can be assured specifically in case the states of the network and the server dynamically changes.

## Claims

1. A data transfer apparatus (14) comprising:
a transferring destination information reader (23) for reading information of a mirror server (13) associated with a primary server (12) based on a request for communication of a predetermined quality sent from a source terminal (11) to the primary server (12);
a resource reservation instructor (25) for giving instructions for a communication resource reservation corresponding to the predetermined communication quality to the mirror server (13), and
a destination changer (22) for changing from the primary server to the mirror server;
**characterised by**
a resource reserver (26) for determining whether or not a communication resource of the mirror server (13) has been reserved based on the instructions by the resource reservation instructor (25), and for responding with a result of the determination thereof to the resource reservation instruction (25); and wherein
the resource reservation instructor (25) is adapted to instruct the destination changer (22) to change the primary server (12) to the mirror server (13) which has reserved the communication resource when the resource reserver (26) determines that the communication resource of the mirror server (13) has been reserved.

2. The data transfer apparatus as claimed in Claim 1 wherein the transferring destination information reader (23) is provided with a transferring destination information holder (24) for holding an address of the mirror server (13).

3. The data transfer apparatus as claimed in Claim 1 wherein the communication resource comprises a communication bandwidth.

4. The data transfer apparatus as claimed in Claim 1 wherein the mirror server (13) includes the primary server (12).

5. The data transfer apparatus as claimed in Claim 1 wherein in presence of a plurality of mirror servers (13), the resource reservation instructor (25) is adapted to instruct the resource reserver (26) to make a communication resource reservation to a single mirror server (13) thereof, and to instruct the destination changer (22) to change the primary server (12) when the communication resource of the single mirror server (13) has been reserved by the resource reserver (26), otherwise to instruct the resource reserver (26) to make a communication resource reservation to another single mirror server thereof.

6. The data transfer apparatus as claimed in Claim 1 wherein in presence of a plurality of mirror servers (13), the resource reservation instructor (25) is adapted to instruct the resource reserver (26) to simultaneously make a communication resource reservation per each of the mirror servers, and to instruct the destination changer (22) to change the primary server (12) to the mirror server whose communication resource has been firstly reserved by the resource reserver (26).

7. The data transfer apparatus as claimed in Claim 1 wherein in presence of a plurality of mirror servers (13), the resource reservation instructor (25) is adapted to instruct the resource reserver (26) to simultaneously make a communication resource reservation per each of the mirror servers, to select one of the mirror servers whose communication resource has been reserved by the resource reserver (26) according to a predetermined priority, and to instruct the destination changer (22) to change the primary server to the selected mirror server.

8. The data transfer apparatus as claimed in Claim 6 wherein the resource reservation instructor (25) is adapted to instruct the resource reserver (26) to release the communication resource of the mirror server except for the one which changes the primary server.

9. The data transfer apparatus as claimed in Claim 1 further comprising:
a service monitor (61) for monitoring an amount of data with the mirror server (13) whose communication resource is reserved by the resource reserver (26); and wherein
the resource reservation instructor (25) is adapted to instruct the resource reserver (26) to release the communication resource of the mirror server whose amount of data becomes less than a predetermined amount.

10. The data transfer apparatus as claimed in Claim 2, further comprising an address manager for changing the address of the mirror server held in the transferring destination information holder (24) based on an external input.

11. The data transfer apparatus as claimed in Claim 7 wherein the resource reservation instructor (25) is adapted to instruct the resource reserver (26) to release the communication resource of the mirror server except for the one which changes the primary server.

12. The data transfer apparatus as claimed in Claim 6 further comprising:
a service monitor (61) for monitoring an amount of data with the mirror server (13) whose communication resource is reserved by the resource reserver (26); and wherein
the resource reservation instructor (25) is adapted to instruct the resource reserver (26) to release the communication resource of the mirror server whose amount of data becomes less than a predetermined amount.

13. The data transfer apparatus as claimed in Claim 7 further comprising:
a service monitor (61) for monitoring an amount of data with the mirror server (13) whose communication resource is reserved by the resource reserver (26); and wherein
the resource reservation instructor (25) is adapted to instruct the resource reserver (26) to release the communication resource of the mirror server whose amount of data becomes less than a predetermined amount.

## Patentansprüche

1. Eine Datenübertragungsvorrichtung (14) mit:
einem Übertragungsbestimmungsort-Informationslesegerät (23) zum Lesen einer Information eines mit einem Primärserver (12) verknüpften Spiegelservers (13) basierend auf einer Kommunikationsanforderung einer vorbestimmten Qualität, die von einem Quellenendgerät (11) zu dem Primärserver (12) gesendet ist;
einem Ressourcenreservierungsanweiser (25) zum Geben von Anweisungen für eine Kommunikationsressourcenreservierung entsprechend der vorbestimmten Übertragungsqualität an den Spiegelserver (13), und
einem Bestimmungsortswechsler (22) zum Wechseln von dem Primärserver zu dem Spiegelserver;
**gekennzeichnet durch**
einen Ressourcenreservierer (26) zum Bestimmen, ob eine Übertragungsressource des Spiegelservers (13) reserviert worden ist oder nicht, basierend auf den Anweisungen **durch** den Ressourcenreservierungsanweiser (25), und zum Erwidern mit einem Ergebnis der Bestimmung davon zu dem Ressourcenreservierungsanweiser (25); und wobei
der Ressourcenreservierungsanweiser (25) angepasst ist zum Anweisen des Bestimmungsortswechslers (22) zum Wechseln des Primärservers (12) zu dem Spiegelserver (13), der die Kommunikationsressource reserviert hat, wenn der Ressourcenreservierer (26) bestimmt, dass die Kommunikationsressource des Spiegelservers (13) reserviert worden ist.

2. Die Datenübertragungsvorrichtung nach Anspruch 1, wobei das Übertragungsbestimmungsort-Informationslesegerät (23) mit einem Übertragungsbestimmungsort-Informationshalter (24) zum Halten einer Adresse des Spiegelservers (13) ausgestattet ist.

3. Die Datenübertragungsvorrichtung nach Anspruch 1, wobei die Kommunikationsressource eine Kommunikationsbandbreite umfasst.

4. Die Datenübertragungsvorrichtung nach Anspruch 1, wobei der Spiegelserver (13) den Primärserver (12) beinhaltet.

5. Die Datenübertragungsvorrichtung nach Anspruch 1, wobei in Anwesenheit einer Vielzahl von Spiegelservern (13) der Ressourcenreservierungsanweiser (25) angepasst ist zum Anweisen des Ressourcenreservierers (26) zum Durchführen einer Kommunikationsressourcenreservierung an einen einzelnen Spiegelserver (13) davon, und zum Anweisen des Bestimmungsortswechslers (22) zum Wechseln des Primärservers (12), wenn.die Kommunikationsressource des einzelnen Spiegelservers (13) durch den Ressourcenreservierer (26) reserviert worden ist, und andernfalls zum Anweisen des Ressourcenreservierers (26) zum Durchführen einer Kommunikationsressourcenreservierung zu einem anderen einzelnen Spiegelserver davon.

6. Die Datenübertragungsvorrichtung nach Anspruch 1, wobei in Anwesenheit einer Vielzahl von Spiegelservern (13) der Ressourcenreservierungsanweiser (25) angepasst ist zum Anweisen des Ressourcenreservierers (26) zum gleichzeitigen Durchführen einer Kommunikationsressourcenreservierung für jeden der Spiegelserver, und zum Anweisen des Bestimmungsortswechslers (22) zum Wechseln des Primärservers (12) zu dem Spiegelserver, dessen Kommunikationsressource zuerst durch den Ressourcenreservierer (26) reserviert worden ist.

7. Die Datenübertragungsvorrichtung nach Anspruch 1, wobei in Gegenwart einer Vielzahl von Spiegelservern (13) der Ressourcenreservierungsanweiser (25) angepasst ist zum Anweisen des Ressourcenreservierers (26) zum gleichzeitigen Durchführen einer Kommunikationsressourcenreservierung für jeden der Spiegelserver zum Auswählen eines der Spiegelserver, dessen Übertragungsressource durch den Ressourcenreservierer (26) gemäß einer vorbestimmten Priorität reserviert worden ist, und zum Anweisen des Bestimmungsortswechslers (22) zum Wechseln des Primärservers zu dem ausgewählten Spiegelserver.

8. Die Datenübertragungsvorrichtung nach Anspruch 6, wobei der Ressourcenreservierungsanweiser (25) angepasst ist zum Anweisen des Ressourcenreservierers (26) zum Freigeben der Kommunikationsressource des Spiegelservers bis auf die eine, die den Primärserver wechselt.

9. Die Datenübertragungsvorrichtung nach Anspruch 1, ferner umfassend:
einen Dienstmonitor (61) zum Überwachen einer Datenmenge mit dem Spiegelserver (13), dessen Kommunikationsressource durch den Ressourcenreservierer (26) reserviert ist; und wobei
der Ressourcenreservierungsanweiser (25) angepasst ist zum Anweisen des Ressourcenreservierers (26) zum Freigeben der Kommunikationsressource des Spiegelservers, deren Datenmenge geringer wird als eine vorbestimmte Menge.

10. Die Datenübertragungsvorrichtung nach Anspruch 2, ferner umfassend einen Adressverwalter zum Wechseln der in dem Übertragungsbestimmungsort-Informationshalter (24) gehaltenen Adresse des Spiegelservers basierend auf einer externen Eingabe.

11. Die Datenübertragungsvorrichtung nach Anspruch 7, wobei der Ressourcenreservierungsanweiser (25) angepasst ist zum Anweisen des Ressourcenreservierers (26) zum Freigeben der Kommunikationsressource des Spiegelservers bis auf die eine, die den Primärserver wechselt.

12. Die Datenübertragungsvorrichtung nach Anspruch 6, ferner umfassend:
einen Dienstmonitor (61) zum Überwachen einer Datenmenge mit dem Spiegelserver (13), dessen Kommunikationsressource durch den Ressourcenreservierer (26) reserviert ist; und wobei
der Ressourcenreservierungsanweiser (25) angepasst ist zum Anweisen des Ressourcenreservierers zum Freigeben der Kommunikationsressource des Spiegelservers, deren Datenmenge geringer als eine vorbestimmte Menge wird.

13. Die Datenübertragungsvorrichtung nach Anspruch 7, ferner umfassend:
einen Dienstmonitor (61) zum Überwachen einer Datenmenge mit dem Spiegelserver (13), dessen Kommunikationsressource durch den Ressourcenreservierer (26) reserviert ist; und wobei
der Ressourcenreservierungsanweiser (25) angepasst ist zum Anweisen des Ressourcenreservierers (26) zum Freigeben der Kommunikationsressource des Spiegelservers, deren Datenmenge geringer als eine vorbestimmte Menge wird.

## Revendications

1. Appareil (14) de transfert de données, comprenant :
un lecteur (23) d'informations de destination de transfert, servant à lire des informations relatives à un serveur miroir (13) associé à un serveur principal (12) se basant sur une demande de communication d'une qualité prédéterminée qui est envoyée d'un terminal source (11) au serveur principal (12) ;
un instructeur de réservation de ressources (25) servant à donner, au serveur miroir (13), des instructions relatives à une réservation de ressources de communication correspondant à la qualité de communication prédéterminée ; et
un moyen (22) de changement de destination servant à passer du serveur principal au serveur miroir ;
**caractérisé par** un moyen (26) de réservation de ressources servant à déterminer si des ressources de communication du serveur miroir (13) ont ou non été réservées sur la base des instructions par l'instructeur de réservation de ressources (25) et à répondre, à destination de l'instructeur de réservation de ressources, avec le résultat de cette détermination ; et en ce que
l'instructeur de réservation de ressources (25) est conçu pour donner des instructions au moyen (22) de changement de destination afin de faire agir le changement sur le serveur principal (12) au profit du serveur miroir (13) qui a réservé les ressources de communication lorsque le moyen (26) de réservation de ressources détermine que les ressources de communication du serveur miroir (13) ont été réservées.

2. Appareil de transfert de données selon la revendication 1, où le lecteur (23) d'informations de destination de transfert est doté d'un moyen (24) de maintien d'informations de destination de transfert servant à maintenir une adresse du serveur miroir (13).

3. Appareil de transfert de données selon la revendication 1, où les ressources de communication comprennent une largeur de bande de communication.

4. Appareil de transfert de données selon la revendication 1, où le serveur miroir (13) comporte le serveur principal (12).

5. Appareil de transfert de données selon la revendication 1, où en présence d'une pluralité de serveurs miroirs (13), l'instructeur (25) de réservation de ressources est conçu pour donner instruction au moyen de réservation de ressources (26) de faire une réservation de ressources de communication auprès d'un unique serveur miroir (13) de cette pluralité, et à donner instruction au moyen de changement de destination (22) de faire agir le changement sur le serveur principal (12) lorsque les ressources de communication de l'unique serveur miroir (13) a été réservé par le moyen de réservation de ressources, et, sinon, de donner instruction au moyen de réservation de ressources (26) de faire une réservation de ressources de communication auprès d'un autre unique serveur miroir de la pluralité.

6. Appareil de transfert de données selon la revendication 1, où, en présence d'une pluralité de serveurs miroirs (13), l'instructeur de réservation de ressources (25) est conçu pour donner instruction au moyen de réservation de ressources (26) de faire simultanément une réservation de ressources de communication pour chacun des serveurs miroirs, et donner Instruction au moyen de changement de destination (2) de faire agir le changement sur le serveur principal (12) au profit du serveur miroir dont les ressources de communication ont été réservées en premier par le moyen de réservation de ressources (26).

7. Appareil de transfert de données selon la revendication 1, où, en présence d'une pluralité de serveurs miroirs (13), l'instructeur de réservation de ressources (25) est conçu pour donner instruction au moyen de réservation de ressources (26) de faire simultanément une réservation de ressources de communication pour chacun des serveurs miroirs, sélectionner l'un des serveurs miroirs dont les ressources de communication ont été réservées par le moyen de réservation de ressources (26) en fonction d'une priorité prédéterminée, et donner instruction au moyen de changement de destination (22) de faire agir le changement sur le serveur principal au profit du serveur miroir sélectionné.

8. Appareil de transfert de données selon la revendication 6, où l'instructeur de réservation de ressources (25) est conçu pour donner instruction au moyen de réservation de ressources (26) de libérer les ressources de communication du serveur miroir à l'exception de celui au profit duquel un changement a été opéré sur le serveur principal.

9. Appareil de transfert de données selon la revendication 1, comprenant en outre :
un moyen (61) de contrôle de service servant à contrôler la quantité de données avec le serveur miroir (13) dont les ressources de communication ont été réservées par le moyen de réservation de ressources (26) ; et
où l'instructeur de réservation de ressources (25) est conçu pour donner instruction au moyen de réservation de ressources (26) de libérer les ressources de communication du serveur miroir dont la quantité de données est devenue inférieure à une quantité prédéterminée.

10. Appareil de transfert de données selon la revendication 2, comprenant en outre un gestionnaire d'adresses servant à changer l'adresse du serveur miroir conservée dans le moyen (24) de maintien d'informations de destination de transfert sur la base d'un signal d'entrée externe.

11. Appareil de transfert de données selon la revendication 7, où l'instructeur de réservation de ressources (25) est conçu pour donner instruction au moyen (26) de réservation de ressources de libérer les ressources de communication du miroir serveur à l'exception de celui au profit duquel un changement a été opéré sur le serveur principal.

12. Appareil de transfert de données selon la revendication 6, comprenant en outre :
un moyen (61) de contrôle de service servant à contrôler la quantité de données avec le serveur miroir (13) dont les ressources de communication sont réservées par le moyen (26) de réservation de ressources ; et
où l'instructeur de réservation de ressources (25) est conçu pour donner instruction au moyen de réservation de ressources (26) de libérer les ressources de communication du serveur miroir dont la quantité de données est devenue inférieure à une quantité prédéterminée.

13. Appareil de transfert de données selon la revendication 7, comprenant en outre un moyen (61) de contrôle de service servant à contrôler la quantité de données avec le serveur miroir (13) dont les ressources de communication ont été réservées par le moyen (26) de réservation de ressources ; et
où l'instructeur de réservation de ressources (25) est conçu pour donner instruction au moyen de réservation de ressources (26) de libérer les ressources de communication du serveur miroir dont la quantité de données est devenue inférieure à une quantité prédéterminée.
